(19) Europäisches Patentamt
European Patent Office
Office européen des brevets

(11) **EP 1 625 188 B1**

(12) **EUROPÄISCHE PATENTSCHRIFT**

(45) Veröffentlichungstag und Bekanntmachung des Hinweises auf die Patenterteilung:
**20.01.2010 Patentblatt 2010/03**

(51) Int Cl.:
***C09D 151/00*** (2006.01)   ***C08F 257/02*** (2006.01)
***B23B 27/08*** (2006.01)   ***C08L 51/00*** (2006.01)

(21) Anmeldenummer: **04730983.6**

(22) Anmeldetag: **04.05.2004**

(86) Internationale Anmeldenummer:
**PCT/EP2004/004708**

(87) Internationale Veröffentlichungsnummer:
**WO 2004/099330 (18.11.2004 Gazette 2004/47)**

(54) **POLYMERDISPERSION MIT FARBEFFEKT**

POLYMER DISPERSION WITH A COLOUR EFFECT

DISPERSION POLYMERE A EFFET CHROMATIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **09.05.2003 DE 10321084**

(43) Veröffentlichungstag der Anmeldung:
**15.02.2006 Patentblatt 2006/07**

(73) Patentinhaber: **BASF SE**
**67056 Ludwigshafen (DE)**

(72) Erfinder:
• **HE, Xu**
**67063 Ludwigshafen (DE)**
• **LEYRER, Reinhold, J.**
**67125 Dannstadt (DE)**
• **SCHÖPKE, Holger**
**69151 Neckargemünd (DE)**

(56) Entgegenhaltungen:
**EP-A- 0 847 852    DE-A- 10 055 190**
**US-A- 4 403 003**

• **DATABASE WPI Section Ch, Week 200217 Derwent Publications Ltd., London, GB; Class A84, AN 2002-125634 XP002290431 -& JP 2001 239622 A (DAINIPPON INK & CHEM INC), 4. September 2001 (2001-09-04)**

**Beschreibung**

Die Erfindung betrifft Verfahren zur Verbesserung der Farbbrillanz und der Stabilität eines farbigen Polymersystem aus einer Matrix und diskreten Polymerteilchen, welche gemäß einer definierten Raumgitterstruktur in der Matrix verteilt sind, dadurch gekennzeichnet dass man auf die farbige Polymerschicht eine transparente Polymerschicht aufbringt.

Weiterhin betrifft die Erfindung farbige Polymersysteme, die nach diesen Verfahren erhältlich sind und die Verwendung der farbigen Polymersysteme zur Beschichtung z.B. von Kunststoffen, Papier oder in optischen Anzeigen.

Aus DE-19717879, DE-19820302 und DE-19834194 sind farbige Polymersysteme bekannt, bei denen diskrete Polymerteilchen in einen Matrix dispergiert sind.

In DE 10229732 (PF 53679) ist die Verwendung derartiger Polymerschichten in optischen Anzeigeelementen beschrieben.

EP-A-0 847 852 offenbart die Bereitstellung von Verbundschichtplatten oder -folien, welche aus wenigstens 3 Schichten bestehen, wobei Schicht 1 aus einem Pfropfcopolymerisat A und einem Copolymerisat B sowie optional aus einem Polycarbonat C und faser- oder teilchenförmigen Füllstoffen D aufgebaut ist, Schicht 2 eine Farbträger- bzw. Zwischenschicht darstellt und Schicht 3 als PMMA-Schutzschicht mit erhöhter Kratzfestigkeit fungiert.

Aufgabe der vorliegenden Erfindung war die Verbesserung der Farbbrillanz und der Stabilität der farbigen Polymersysteme. Demgemäss wurde das eingangs beschriebene Verfahren gefunden.

Die farbigen Polymersysteme bestehen im wesentlichen aus einer Matrix und diskreten Polymerteilchen, welche gemäß einer definierten Raumgitterstruktur in der Matrix verteilt sind.

Zu den Polymerteilchen

Zur Ausbildung einer definierten Raumgitterstruktur sollen die diskreten Polymerteilchen möglichst gleich groß sein. Ein Maß für die Einheitlichkeit der Polymerteilchen ist der sogenannte Polydispersitätsindex, berechnet nach der Formel

$$P.I.=(D_{90}-D_{10})/D_{50}$$

worin $D_{90}$, $D_{10}$ und $D_{50}$ Teilchendurchmesser bezeichnen, für die gilt

$D_{90}$:   90 Gew.% der Gesamtmasse aller Teilchen hat einen Teilchendurchmesser klei- ner oder gleich $D_{90}$

$D_{50}$:   50 Gew.% der Gesamtmasse aller Teilchen hat einen Teilchendurchmesser klei- ner oder gleich $D_{50}$

$D_{10}$:   10 Gew.% der Gesamtmasse aller Teilchen hat einen Teilchendurchmesser klei- ner oder gleich $D_{10}$

Weitere Erläuterungen zum Polydispersitätsindex finden sich z.B. in DE-A 19717879 (insbesondere Zeichnungen Seite 1).

Die Teilchengrößenverteilung kann in an sich bekannter Weise, z.B. mit einer analytischen Ultrazentrifuge (W. Mächtle, Makromolekulare Chemie 185 (1984) Seite 1025-1039) bestimmt werden und daraus der $D_{10}$, $D_{50}$ und $D_{90}$-Wert entnommen und der Polydispersitätsindex bestimmt werden.

Die Polymerteilchen haben bevorzugt einen $D_{50}$-Wert im Bereich um 0,05 bis 5 $\mu$m. Es kann sich bei den Polymerteilchen um eine Teilchensorte oder mehrere Teilchensorten mit unterschiedlichem $D_{50}$-Wert handeln, wobei jede Teilchensorte einen Polydispersitätsindex bevorzugt kleiner 0,6, besonders bevorzugt kleiner 0,4 und ganz besondere bevorzugt kleiner 0,3 und insbesondere kleiner 0,15 hat.

Insbesondere bestehen die Polymerteilchen nun aus einer einzigen Teilchensorte. Der $D_{50}$-Wert liegt dann vorzugsweise zwischen 0,05 und 2 $\mu$m, besonders bevorzugt liegt er zwischen 100 und 400 Nanometer.

Auch Polymerteilchen, welche z.B. aus 2 oder 3, vorzugsweise 2 hinsichtlich des $D_{50}$-Wertes unterschiedlichen Teilchensorten bestehen, können eine gemeinsame Gitterstruktur bilden (kristallisieren) sofern für jede Teilchensorte die obige Bedingung hinsichtlich des Polydispersitätsindexes erfüllt ist. Geeignet sind z.B. Gemische in Teilchensorten mit einem $D_{50}$-Wert von 0,3 bis 0,5 $\mu$m und mit einem $D_{50}$-Wert von 0,1 bis 0,3 $\mu$m.

Die Polymerteilchen bestehen vorzugsweise aus einem Polymer mit einer Glasüberganstemperatur größer 30 °C, besonders bevorzugt größer 50 °C und ganz besonders bevorzugt größer 70 °C, insbesondere größer 90 °C.

Die Glasübergangstemperatur lässt sich nach üblichen Methoden wie Differentialthermoanalyse oder Differentail Scanning Calorimetrie (s. z.B. ASTM 3418/82, sog. "mid-point temperature") bestimmen.

Das Polymer besteht vorzugsweise zu mindestens 40 Gew.%, bevorzugt zu mindestens 60 Gew.-%, besonders bevorzugt zu mindestens 80 Gew.-% aus sogenannte Hauptmonomeren.

Die Hauptmonomeren sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren genannt, mit einer Doppelbindung z.B. Ethylen oder Propylen.

Als Hauptmonomere bevorzugt sind die $C_1$- bis $C_{20}$-Alkylacrylate und -methacrylate, insbesondere $C_1$- bis $C_8$-Alkylacrylate und -methacrylate, Vinylaromaten, insbesondere Styrol, und deren Mischungen, insbesondere auch Mischungen der Alkyl(meth)acrylate und Vinylaromaten.

Ganz besonders bevorzugt sind Methylacrylat, Methylmethacrylat, Ethylacrylat, n-Butylacrylat, n-Hexylacrylat, Octylacrylat und 2-Etylhexylacrylat, Styrol sowie Mischungen dieser Monomere.

Die Polymerteilchen sind vorzugsweise chemisch vernetzt. Dazu können Monomere mit mindestens zwei polymerisierbaren Gruppen, z.B. Divinylbenzol oder Allylmethacrylat, mitverwendet erden (interne Vernetzung). Es können aber auch Vernetzer zugesetzt werden (externe Vernetzung).

Zur Matrix

Zwischen der Matrix und den Polymerteilchen sollte ein Unterschied im Brechungsindex bestehen.

Bevorzugt sollte der Unterschied mindestens 0,01, besonders bevorzugt mindestens 0,1 betragen.

Dabei können sowohl die Matrix als auch die Polymerteilchen den höheren Brechungsindex haben. Entscheidend ist, dass ein Unterschied besteht.

Bevorzugt sind polymere Verbindungen, z.B. Polykondensate, Polyaddukte oder durch radikalische Polymerisation erhältlich Polymere.

Genannt seien z.B. Polyester, Polyamide, Formaldehydharze, wie Melamin-, Harnstoff- oder Phenol-Formaldehydkondensate, Polyepoxide, Polyurethane, oder auch die oben genannten Polymere, welche die aufgeführten Hauptmonomere enthalten, z.B. Polyacrylate, Polybutadiene, Styrol-/Butadiencopolymerisate.

Zur Herstellung des farbigen Polymersystems.

Herstellungsmethoden sind in DE-A 19717879 und DE-A 19820302 beschrieben.

Herstellung der diskreten Polymerteilchen.

Die Herstellung der Polymerteilchen, bzw. Polymeren erfolgt in einer bevorzugten Ausführungsform durch Emulsionspolymerisation, es handelt sich daher um ein Emulsionspolymerisat.

Die Emulsionspolymerisation ist insbesondere bevorzugt, weil so Polymerteilchen mit gleichmäßiger Kugelform erhältlich sind.

Die Herstellung kann jedoch z.B. auch durch Lösungspolymerisation und anschließende Dispergierung in Wasser erfolgen.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die Menge der Initiatoren beträgt im allgemeinen 0,1 bis 10 Gew.%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Eine einheitliche Teilchengrößenverteilung, d.h. ein geringer Polydispersitätsindex ist durch den Fachmann bekannte Maßnahmen erhältlich, z.B. durch Variation der Menge der grenzflächenaktiven Verbindung (Emulgator oder Schutzkolloide) und/oder entsprechende Rührergeschwindigkeiten.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Herstellung der Mischung Polymerteilchen / Matrix

Die bei der Emulsionspolymerisation erhaltene wässrige Dispersion der diskreten Polymerteilchen kann mit der zur Einstellung der Gitterstruktur benötigten Menge der polymeren Verbindung gemischt und anschließend das Wasser entfernt werden. Aufgrund der oftmals hohen Viskosität der polymeren Verbindung kann es vorteilhaft sein, die Polymerteilchen zunächst mit den Aufbaukomponenten der polymeren Verbindung zu mischen und dann, nach erfolgter Dispergierung der Polymerteilchen, diese Aufbaukomponenten z.B. durch Kondensation, Adduktbildung zu den polymeren Verbindungen umzusetzen.

Emulsionspolymerisate als diskrete Polymerteilchen und Emulsionspolymerisate als Matrix.

Die entsprechenden Emulsionspolymerisate können einfach gemischt und anschließend das Wasser entfernt werden. Soweit die Emulsionspolymerisate für die Matrix eine Glasübergangstemperatur unter 20 °C haben (siehe oben), verfilmen die Polymerteilchen bei Raumtemperatur und bilden die durchgehende Matrix, bei höherer Tg ist eine Erwärmung auf Temperaturen oberhalb der Tg erfordedich.

Besonders einfach und vorteilhaft ist es, beide Emulsionspolymerisate in einem Schritt als Kern/Schale-Polymerisat herzustellen. Dazu wird die Emulsionspolymerisation 2-stufig durchgeführt. Zunächst werden die Monomeren polymerisiert, welche den Kern (= spätere diskrete Polymerteilchen) bilden, dann werden in einer 2. Stufe in Gegenwart des Kerns die Monomeren polymerisiert, welche die Schale (= spätere Matrix) bilden. Bei der Schale werden vorzugsweise keine vernetzenden Monomere oder sonstige Vernetzer mitverwendet. Die Schale ist daher vorzugsweise nicht vernetzt.

Besonders bevorzugt wird dabei das Monomerengemisch der zu verfilmden Schale so gewählt, dass die Glasübergangstemperatur der Schale (berechnet nach der Fox-Gleichung) tiefer ist als die des Kerns.

Bei der späteren Entfernung des Wassers verfilmt die nicht-vernetzte Schale und die verbleibenden (harten) Kerne sind als diskrete Poly-merteilchen in der Matrix verteilt. Das Polymersystem verursacht einen optischen Effekt, das heißt eine zu beobachtende Reflexion durch Interferenz des an den Polymerteilchen gestreuten Lichts.

Die Wellenlänge der Reflexion kann dabei je nach Abstand der Polymerteilchen im gesamten elektromagnetischen Spektrum liegen. Vorzugsweise liegt die Wellenlänge im UV-Bereich, IR-Bereich und insbesondere im Bereich des sichtbaren Lichts.

Die Wellenlänge der zu beobachtenden Reflexion hängt dabei nach der bekannten Bragg-Gleichung von dem Netzebenenabstand, hier der Abstand zwischen den in einer Raumgitterstruktur in der Matrix angeordneten Polymerteilchen, ab.

Damit sich die gewünschte Raumgitterstruktur mit dem gewünschten Abstand zwischen den Polymerteilchen einstellt, ist insbesondere der Gewichtsanteil der Matrix entsprechend zu wählen. Bei den vorstehend beschriebenen Herstellmethoden sollten die organischen Verbindungen, z.B. polymere Verbindungen in entsprechender Menge eingesetzt werden.

Der Gewichtsanteil der Matrix wird insbesondere so bemessen, dass eine Raumgitterstruktur der Polymerteilchen entsteht, welche elektromagnetische Strahlung im gewünschten Bereich reflektiert.

Der Abstand zwischen den Polymerteilchen (jeweils bis zum Mittelpunkt der Teilchen) beträgt geeigneterweise 100 bis 400 nm, wenn ein Farbeffekt, d.h. eine Reflexion im Bereich des sichtbaren Lichts gewünscht ist.

Die Brillanz und die Stabilität dieses optischen Effekts wird erfindungsgemäß durch das Aufbringen eine transparenten Polymerschicht verbessert.

Bei dem Polymer, welches die transparente Schicht ausbildet, kann es sich um ein beliebiges Polymer handeln. In Betracht kommen Polykondensate, Polyaddukte oder Polymere, die aus radikalisch polymerisierbaren Verbindungen (Monomere) erhältlich sind. Letztere sind bevorzugt.

Polymer der transparenten Schicht insgesamt zu mindestens 40 Gew. %, vorzugsweise zu mindestens 60 Gew.% aus sogenannten Hauptmonomeren, ausgewählt aus $C_1$ bis $C_{20}$ Alkyl(meth)acrylaten, Vinylestern von bis zu 20 C-Atome enthaltenden Carbonsäuren, Vinylaromaten mit bis zu 20 Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut.

Besonders bevorzugt handelt es sich bei dem Polymer der transparenten Polymerschicht um ein Emulsionspolymerisat.

Die Herstellung der Emulsionspolymerisate ist oben beschrieben.

Vorzugsweise liegt der gewichtsmittlere Teilchendurchmesser in der durch Emulsionspolymerisation erhaltenen wässrigen Polymerdispersion zwischen 10 und 500 nm, vorzugsweise zwischen 30 und 200 nm.

Zur Herstellung der transparenten Polymerschicht wird das Polymer, vorzugsweise in Form einer Dispersion oder Lösung, auf das farbige Polymersystem, welches im allgemeinen als farbige Beschichtung oder als Formkörper vorliegt, aufgebracht.

Im Falle einer Dispersion oder Lösung erfolgt eine Trocknung, gegebenenfalls auch bei erhöhter Temperatur.

Die erhaltene transparente Polymerschicht hat vorzugsweise eine Dicke von 0,2 bis 100 $\mu$m, vorzugsweise um 1 bis 50 $\mu$m. Durch die transparente Polymerschicht ist die Brillanz der Farbe mit Stabilität der Farbeffekte verbessert.

Eine weitere Verbesserung kann gegebenenfalls noch durch eine kurzzeitige Erwärmung des farbigen Polymersystems und der aufgebrachten transparenten Polymerschicht auf Temperaturen oberhalb 60 °C erreicht werden.

Beispiele für die Anwendung des Patents

Alle Synthesen wurden in einem 2000-ml-Vierhalskolben durchgeführt, der mit einem Rückflusskühler, einem Stickstoffeintrittsrohr, Eintrittsrohren für die Beschickung mit der Monomeremulsion und der Initiatorlösung und einem Ankerrührer mit einer Drehzahl von 150 pro Minute versehen war.
• Beispiel 1
Synthese einer Kernpartikeldispersion (1. Stufe)
In einem Reaktor mit Ankerrührer, Thermometer, Gaseintrittsrohr, Beschickungsrohren und Rückflusskühler wurden zunächst 258,6 g Wasser vorgelegt, dann wurden 5,08 g Polystyrenkeimpartikeldispersion mit einer Teilchengröße von 30 nm und einem Feststoffgehalt von 33 Masse-% zugegeben. Der Kolbeninhalt wurde anschließend erhitzt und bei einer Drehzahl von 150 min$^{-1}$ gerührt. Während dieser Zeit wurde dem Reaktor Stickstoff zugeführt. Bei Erreichen einer Temperatur von 85°C in dem Wärmebad und von 80 °C im Reaktor wurde die Stickstoffzufuhr eingestellt und vermieden, dass Luft in den Reaktor gelangte. Vor der Polymerisation wurden dem Reaktor 19,3 % einer Natriumpersulfatlösung aus 3,6 g Natriumpersulfat in 100 g Wasser zugeführt und 5 Minuten lang voroxidiert, dann wurde der Rest Natriumpersulfatlösung innerhalb von 4 Stunden zugesetzt. Während dieser 4 Stunden wurden 8,6 Masse-% Monomeremulsion (a), Texapon NSO (Konz.: 28 Masse-%), 5,22 g und 35,0 g n-Butylacrylat innerhalb von 40 Minuten zugesetzt. Anschließend wurde der Rest der Monomeremulsion (a) über eine Zeitdauer von 3 Stunden und 20 Minuten zugegeben. Es wurde davon ausgegangen, dass die Reaktion im MangelRegime abläuft, so dass die Bildung von Zweitkeimen vermieden wird. Nach Abschluss der Monomerzugabe ließ man die Dispersion eine Stunde nachpolymerisieren. Anschließend erfolgte die Abkühlung auf Zimmertemperatur.

a) Monomeremulsion

| | |
|---|---|
| 540,0 g | Styren |
| 13,33 g | Divinylbenzen |
| 1,67 g | Allylmethacrylat |
| 10,0 g | Acrylsäure |
| 16,39 g | Texapon, Massekonz.: 28 % |
| 22,11 g | Natronlauge, Massekonz.: 25 % |
| 501,3 g | Wasser |

Die Dispersion weist die folgenden Eigenschaften auf :

| | |
|---|---|
| Feststoffgehalt: | 40 Masse-% |
| Teilchengröße: | 206,3 nm |
| Koagulation: | < 1,5 g |
| pH-Wert: | 6,59 |
| Polydispersitätsindex: | 0,14 |

Der Erhalt von Kernpartikeln unterschiedlicher Größen ist durch Änderung der Keimpartikelkonzentrationen möglich. Tabelle 1 zeigt unterschiedliche Partikel.

Tabelle 1

| Beispiel Nr. | 1A | 1B | 1C | 1D | 1E | 1F |
|---|---|---|---|---|---|---|
| Keimkonz % | 0,65 | 0,55 | 0,44 | 0,275 | 0,2 | 0,17 |
| Feststoffgehalt | 35,0 | 35,4 | 40,2 | 39,9 | 30,0 | 34,8 |
| Teilchengröße (nm) | 149,1 | 161,5 | 170,6 | 206,3 | 208,6 | 254,8 |
| P.I. | 0,13 | 0,16 | 0,17 | 0,14 | 0,26 | 0,14 |

• Beispiel 2

Synthese einer Kem-Schale-Partikeldispersion

In einem Reaktor mit Ankerrührer, Thermometer, Gaseintrittsrohr, Beschickungsrohren und Rückflusskühler wurden 325,8 g Dispersion nach Beispiel 1 D vorgelegt. Dann wurde mit dem Erhitzen und dem Rühren bei einer Drehzahl von 150 min-1 begonnen. Während dieser Zeit wurde dem Reaktor Stickstoff zugeführt. Bei Erreichen einer Temperatur von 85 °C in dem Wärmebad und 80°C im Reaktor wurde die Stickstoffzufuhr eingestellt und vermieden, dass Luft in den Reaktor gelangte. 9,8 % einer Natrium-persulfatlösung aus 0,8 g Natriumpersulfat in 50 g Wasser (Initiatorlösung) wurden vor der Polymerisation zugegeben. Nach 5 Minuten wurde der Rest der Natriumpersulfatlösung innerhalb von 3 Stunden zugesetzt. Während der gleichen 3 Stunden wurde innerhalb von 45 Minuten die Monomeremulsion (a) zugegeben, anschließend ließ man 15 Minuten nachpolymerisieren. Dann wurde die Monomeremulsion (b) innerhalb von 2 Stunden zugegeben und nach einer weiteren Stunde Nachpolymerisation auf Zimmertemperatur abgekühlt.

a) Monomeremulsion (2. Stufe)

| | |
|---|---|
| 11,7 g | Styrol |
| 9,1 g | n-Butylacrylat |

(fortgesetzt)

| | |
|---|---|
| 1,17 g | Allylmethacrylat |
| 1,46 g | Acrylsäure |
| 1,86 g | Texapon, Massekonz.: 28 % |
| 1,46 g | Natronlauge, Massekonz: 25 % |
| 55,0 g | Wasser |

b) Monomeremulsion (3. Stufe)

| | |
|---|---|
| 71,5 g | n-Butylacrylat |
| 34,6 g | Methylmethacrylat |
| 1,3 g | Acrylsäure |
| 1,16 g | Texapon, Massekonz.: 28 % |
| 0,77 g | Natronlauge, Massekonz: 25 % |
| 53,5 g | Wasser |

Die Dispersion weist die folgenden Eigenschaften auf:

| | |
|---|---|
| Masseverhältnis Kern: | Mantel: 1:1 |
| Feststoffgehatt: | 40 Masse-% |
| Teilchengröße: | 279,8 nm |
| Koagulation: | < 2 g |
| pH-Wert: | 5,66 |
| Polydispersitätsindex: | 0,15 |

Es können Kern-Schale-Partikel mit einem Verhältnis Kern : Mantel von 1:1 hergestellt werden. Die Tabelle 1 zeigt die Eigenschaften von Kern-Schale-Partikeln und den Filmen, die aus den Dispersionen hergestellt werden.

Tabelle 2

| Beispiel Nr. | 2A | 2B | 2C | 2D | 2E | 2F |
|---|---|---|---|---|---|---|
| Kern-Nummer | 1A | 1B | 1C | 1D | 1E | 1F |
| Feststoffgehalt | 40,2 | 40,3 | 40,2 | 40,8 | 40,0 | 39,9 |
| Teilchengröße (nm) | 234,2 | 224,0 | 233,7 | 279,8 | 364,7 | 332,6 |
| P.I. | 0,19 | 0,17 | 0,16 | 0,15 | 0,26 | 0,13 |
| Filmfarbe (p) | schwarzviolett | violett | blau | grün | orange | rot |
| Filmfarbe (s) | schwarz | schwarzviolett | schwarzblau | hellblau | blau-grün | grün |

• Beispiel 3

Synthese einer Kernpartikeldispersion

In einem Reaktor mit Ankerrührer, Thermometer, Gaseintrittsrohr, Beschickungsrohren und Rückflusskühler wurden zunächst 206,3 g Wasser vorgelegt, anschließend wurden 2,73 g Polystyrenkeimpartikeldispersion mit einer Teilchengröße von 30 nm und einem Feststoffgehalt von 33 Masse-% zugesetzt. Dann wurde mit dem Erhitzen und Rühren bei einer Drehzahl von 150 min-1 begonnen. Während dieser Zeit wurde dem Reaktor Stickstoff zugeführt. Bei Erreichen einer Temperatur von 85 °C in dem Wärmebad und von 80 °C im Reaktor wurde die Stickstoffzufuhr eingestellt und vermieden, dass Luft in den Reaktor gelangte. Vor der Polymerisation wurden dem Reaktor 2,4 Masse% einer Natriumpersulfatlösung aus 2,7 g Natriumpersulfat in 187,0 g Wasser zugesetzt, nach 5 Minuten wurde der Rest der Natriumpersulfatlösung über eine Zeit von 4 Stunden zugegeben. Während dieser 4 Stunden wurden innerhalb von 40 Minuten 8,6 Masse-% der Monomeremulsion (a) und 30,0 g n-Butylacrylat zugesetzt; dann wurde der Rest der Monomeremulsion (a) über eine Zeit von 3 Stunden und 20 Minuten zugegeben. Es wurde davon ausgegangen, dass die Reaktion im Mangelregime abläuft, so dass die Zweitkeimbildung vermieden wird. Nach dem Abschluss der Monomerzugabe ließ man die Dispersion eine Stunde nachpolymerisieren und auf Zimmertemperatur abkühlen.

a) Monomeremulsion

|  |  |
|---|---|
| 405,0 g | Styren |
| 11,25 g | Divinylbenzen |
| 3,75 g | Acrylsäure |
| 9,643 g | Texapon, Massekonz.: 28 % |
| 10,0 g | Natronlauge, Massekonz.: 25 %. |
| 650,0 g | Wasser |

Die Dispersion weist folgende Eigenschaften auf:

|  |  |
|---|---|
| Feststoffgehalt: | 30 Masse-% |
| Teilchengröße: | 244,5 nm |
| Koagulation: | < 1,5 g |
| pH-Wert: | 7,2 |
| Polydispersitätsindex: | 0,14 |

Kernpartikel unterschiedlicher Größen kann man durch Veränderung der Keimpartikelkonzentrationen herstellen. Tabelle 1 zeigt unterschiedliche Partikel.

Tabelle 3

| Beispiel Nummer | 3A | 3B | 3C |
|---|---|---|---|
| Keimkonz., Ma.-% | 0,42 | 0,275 | 0,2 |
| Feststoffgehalt | 34,9 | 39,9 | 30,0 |
| Teilchengröße (nm) | 166,5 | 264,1 | 246,5 |
| P.I. | 0,20 | 0,20 | 0,14 |

• Beispiel 4

Synthese einer Kern-Schale-Partikeldispersion

In einem Reaktor mit Ankerrührer, Thermometer, Gaseintrittsrohr, Beschickungsrohren und Rückflusskühler wurden 376,3 g Dispersion nach Beispiel 3C vorgelegt, dann wurden 24 g Wasser zugegeben. Anschließend wurde mit dem Erwärmen und Rühren bei einer Drehzahl von 150 min$^{-1}$ begonnen. Während dieser Zeit wurde dem Reaktor Stickstoff zugeführt Bei Erreichen einer Temperatur von 85 °C in dem Wärmebad und von 80 °C im Reaktor wurde die Stickstoffzufuhr eingestellt und vermieden, dass Luft in den Reaktor gelangte. Vor der Polymerisation wurden 5 % einer Natriumpersulfatlösung aus 2,25 g Natriumpersulfat in 153,8 g Wasser (Initiatorlösung) zugesetzt und 5 Minuten lang voroxidiert. Dann wurde der Rest der Natriumpersulfatlösung innerhalb von 2 Stunden zugegeben. Während dieser zwei Stunden wurde die Monomeremulsion (a) zugesetzt, nach einer einstündigen Nachpolymerisation erfolgte dann die Abkühlung auf Zimmertemperatur.

a) Monomeremulsion

|  |  |
|---|---|
| 221,3 g | n-Butylacrylat |
| 146,3 g | Methylmethacrylat |
| 7,5 g | Acrylsäure |
| 5,8 g | Texapon, Massekonz.: 28 % |
| 17,5 g | Natronlauge, Massekonz.: 25 % |
| 268,8 g | Wasser |

Die Dispersion weist die folgenden Eigenschaften auf:

|  |  |
|---|---|
| Masseverhältnis Kern: | Mantel: 1:3 |
| Feststoffgehalt: | 40 Masse-% |
| Teilchengröße: | 390,4 nm |

(fortgesetzt)

| Koagulation: | < 1,5 g |
|---|---|
| pH-Wert: | 7,14 |
| Polydispersitätsindex: | 0,11 |

• Beispiel 5

Synthese einer Kem-Schale-Dispersion

In einem Reaktor mit Ankerrührer, Thermometer, Gaseintrittsrohr, Beschickungsrohren und Rückflusskühler wurden 444,7 g Dispersion nach Beispiel 3A vorgelegt, anschließend wurde mit dem Erhitzen und Rühren bei 150 min$^{-1}$ begonnen. Während dieser Zeit wurde dem Reaktor Stickstoff zugeführt. Bei Erreichen einer Temperatur von 85 °C in dem Wärmebad und von 80 °C im Reaktor wurde die Stickstoffzufuhr eingestellt und vermieden, dass Luft in den Reaktor gelangte. Vor der Polymerisation wurden 2,8 % einer Natriumpersutfatlösung aus 1,38 g Natriumpersulfat in 95,8 g Wasser (Initiatorlösung) zugesetzt; nach 5 Minuten wurde der Rest der Natriumpersulfatlösung über eine Zeit von 3 Stunden zugesetzt. Während dieser drei Stunden wurde innerhalb von 45 Minuten die Monomeremulsion (a) zugesetzt, anschließend ließ man 15 Minuten lang nachpolymerisieren. Dann wurde innerhalb von 2 Stunden das Gemisch (b) zugesetzt und nach einer einstündigen Nachpolymerisation auf Zimmertemperatur abgekühlt.

a) Monomeremulsion

| 20,7 g | Styren |
|---|---|
| 16,1 g | n-Butylacrylat |
| 1,15 g | Acrylsäure |
| 3,36 g | Texapon, Massekonz.: 28 % |
| 2,6 g | Natronlauge, Massekonz.: 25 % |
| 91,1 g | Wasser |

b) Monomeremulsion4

| 189,8 g | n-Butylacrylat |
|---|---|
| 2,3 g | Acrylsäure |
| 2,1 g | Texapon, Massekonz.: 28 % |
| 4,6 g | Natronlauge, Massekonz.: 25 % |
| 74,5 g | Wasser |

Die Dispersion weist die folgenden Eigenschaften auf:

| Masseverhältnis Kern: | Mantel: 1:1,5 |
|---|---|
| Feststoffgehalt: | 39,8 Masse-% |
| Teilchengröße:: | 233,5 nm |
| Koagulation: | < 1,5 g |
| pH-Wert: | 7,30 |
| Polydispersitätsindex: | 0,24 |

• Beispiel 6

Synthese einer Deckschichtdispersion

Ein Reaktor mit Ankerrührer, Thermometer, Gaseintrittsrohr, Beschickungsrohren und Rückflusskühler wurde auf 50 C erhitzt und anschließend mit einem Gemisch aus 13,2 g Methylmethacrylat, 13,0 g n-Butylacrylat, 99,8 g Lutensol TO89 - 20%ig -, 82,29 g Dowfax 2A1 - 45%ig - und 312 g Wasser beschickt. Der Rührer wurde mit einer Drehzahl von 200 min1 in Betrieb genommen, und es wurde eine Minute lang Stickstoff in den Reaktor eingeleitet; anschließend wurden dem Reaktor 9,42 g Hydroperoxid und 25 Masse-% der Initiatorlösung (b) zugesetzt. Die Polymerisationszeit betrug 10 Minuten. Dann wurden das Gemisch (a) und der Rest des Gemischs (b) im Laufe von 2 bzw. 3 Stunden zugegeben.

a) Monomeremulsion

| 160,5 g | n-Butylacrylat |
|---|---|

(fortgesetzt)

| | |
|---|---|
| 283,3 g | Methylmethacrylat |
| 12,7.g | Dowfax 2A1; 45%ig |
| 388,6 g | VE-Wasser |

b) Initiatorlösung

| | |
|---|---|
| 2,83 g | Ascorbinsäure |
| 0,09 g | Dissolvine E-Fe, 6,4%ig |
| 181,2 g | Wasser |

Nachdem die Zugabe der Monomeremulsion (a) abgeschlossen war, ließ man eine weitere Stunde nachpolymerisieren. Dann erfolgte die Abkühlung auf Zimmertemperatur.

Die Dispersion weist die folgenden Eigenschaften auf:

| | |
|---|---|
| Feststoffgehalt | 38,2 Masse-%. |
| Teilchengröße: | 38,2 nm |
| pH-Wert: | 2,6 |

• Beispiel 7

Herstellung des Films

Mit Hilfe einer Rakel wurde ein Film aus dem Stoff nach Beispiel 2 auf einem glatten schwarzen Papier oder auf einer Glasplatte ausgegossen. Nach einer Trocknungszeit von 10 Minuten in der Umgebungsatmosphäre weist jeder Film mit einer Dicke von 30 $\mu$m eine schwache Färbung mit einem stark weißen Hintergrund auf.

• Beispiel 8

Herstellung des Films

Bei einer Wärmebehandlung des Beispiels 7 bei 140 °C über eine Zeit von 1-60 Minuten blieb die Farbe des Films die gleiche, aber mit einem weitaus stärkeren Glanz und fast keinem weißen Hintergrund mehr. Der Film weist eine winkelabhängige Farbe entsprechend den Angaben in Tabelle 2 auf. In Abhängigkeit von der Teilchengröße war die Farbe der Filme unterschiedlich. Bei einer Blickrichtung senkrecht auf die Filmoberfläche änderte sich die Filmfarbe in der Reihenfolge violett, blau, grün, orange und rot, wobei diese Farben den Teilchendurchmessern 226,5 nm, 240,9 nm, 281,3 nm, 294,7 nm bzw. 321,1 nm entsprachen. Bei einem schrägen Betrachtungswinkel (etwa 45°) änderte sich die vorgenannte Farbe zu blauviolett, blau, hellblau, blaugrün bzw. grün. Daraus geht offensichtlich hervor, dass die Filmfarbe über den gesamten sichtbaren Spektralbereich kontinuierlich verändert werden kann, indem man nur einfach die Kern-Mantel-Partikelgröße anpasst.

• Beispiel 9

Herstellung des Films

Wenn man auf den Film nach Beispiel 7 eine dem Beispiel entsprechende Deckschichtdispersion ausgießt und den Deckschichtfilm eine Stunde lang bei Zimmertemperatur oder nur 5-10 Minuten bei einer hohen Temperatur (100 °C) trocknet, erhält man einen glänzenden farbigen Film. Der Film weist eine winkelabhängige Farbe nach den Angaben in Tabelle 2 auf. Die Farbe der Filme änderte sich in Abhängigkeit von der Teilchengröße. Bei einer Blickrichtung senkrecht zur Filmoberfläche änderte sich die Farbe in der Reihefolge violett, blau, grün, orange und rot, wobei diese Farben den Teilchendurchmessern 226,5 nm, 240,9 nm, 281,3 nm, 294,7 nm bzw. 321,1 nm entsprachen. Bei einem schrägen Betrachtungswinkel (etwa 45°) änderte sich die vorgenannte Farbe zu blauviolett, blau, hellblau, blaugrün bzw. grün. Daraus geht offensichtlich hervor, dass die Filmfarbe über den gesamten sichtbaren Spektralbereich kontinuierlich verändert werden kann, indem man nur einfach die Kem-Mantel-Partikelgröße anpasst.

• Beispiel 10

Herstellung des Films

Wenn man auf den Film entsprechend Beispiel 8 eine Deckschichtdispersion nach Beispiel 6 ausgießt, den Deckschichtfilm eine Stunde lang bei Zimmertemperatur oder nur 5-10 Minuten bei einer hohen Temperatur (100 °C) trocknet, erhält man einen glänzenden farbigen Film. Die erzielte Farbintensität ist die gleiche wie beim Beispiel 9.

• Beispiel 11

Die Deckschichtdispersion des Beispiels 6 wird mit der Kem-Schale-Dispersion des Beispiels 2 in einem Masseverhältnis Deckschicht : Kern-Schale-Dispersion von 5:100 bis 12:100 vermischt, auf einem glatten schwarzen Papier wird ein Film ausgegossen und bei Umgebungstemperatur etwa 10 Minuten lang getrocknet; man erhält einen glänzenden farbigen Film. Die dabei erhaltene Farbintensität des Films ist die gleiche wie beim Beispiel 9.

• Beispiel 12

Herstellung des Films

Mit Hilfe einer Rakel wurde auf einem glatten schwarzen Papier oder auf einer Glasplatte ein Film der Dispersion nach Beispiel 4 ausgegossen. Nach einer Trocknungszeit von 10 Minuten in der Umgebungsatmosphäre weist jeder Film mit einer Dicke von 30 $\mu$m eine schwach rote Färbung mit einem stark weißen Hintergrund auf.

• Beispiel 13

Eine Wärmebehandlung des Beispiels 13 bei 140 °C über eine Zeit von 1-60 Minuten führte zu keiner Änderung der erhaltenen Farbintensität.

• Beispiel 14

Mit Hilfe einer Rakel wurde auf einem glatten schwarzen Papier oder auf einer Glasplatte ein Film aus der Dispersion nach Beispiel 5 ausgegossen. Nach einer Trocknungszeit von 10 Minuten in der Umgebungsatmosphäre weist jeder Film mit einer Dicke von 30 $\mu$m eine schwach violette Färbung mit einem stark weißen Hintergrund auf.

• Beispiel 15

Eine Wärmebehandlung des Beispiels 15 bei 140 °C über eine Zeit von 1-60 Minuten führte zu keiner Änderung der erhaltenen Farbintensität.

• Beispiel 16

Tetraethylenglycol (TEG) oder andere Weichmacher werden mit der Kern-Mantel-Dispersion des Beispiels 2 in einem Masseverhältnis Deckschicht: Kern-Mantel-Dispersion von 5:100 bis 10:100 vermischt, auf einem glatten schwarzen Papier wird ein Film ausgegossen und bei Umgebungstemperatur etwa 10 Minuten lang getrocknet; man erhält einen glänzenden farbigen Film und einem stark weißen Hintergrund.

• Beispiel 17

Tetraethylenglycol (TEG) oder andere Weichmacher werden mit der Kern-Mantel-Dispersion des Beispiels 2 in einem Masseverhältnis Deckschicht : Kern-Mantel-Dispersion von 5:100 bis 20 :100 vermischt, auf einem glatten schwarzen Papier wird ein Film ausgegossen und bei Umgebungstemperatur und Luftfeuchtigkeit drei Tage lang getrocknet; der so erhaltene Film mit einer Dicke von 100 $\mu$m weist einen schönen Glanz auf.

**Patentansprüche**

1. Verfahren zur Verbesserung der Farbbrillanz und der Stabilität eines farbigen Polymersystem aus einer Matrix und diskreten Polymerteilchen, welche gemäß einer definierten Raumgitterstruktur in der Matrix verteilt sind, **dadurch gekennzeichnet dass** man auf die farbige Polymerschicht eine transparente Polymerschicht aufbringt.

2. Verfahren gemäß Anspruch 1, **dadurch gekennzeichnet, dass** es sich bei den Polymerteilchen des farbigen Polymersystems um eine oder mehrere Teilchensorten mit einem mittleren Teilchendurchmesser im Bereich von 0,05 bis 5 $\mu$m handelt, wobei aber jede Teilchensorte einen Polydispersitätsindex (PI) kleiner 0,6 hat, berechnet nach der Formel

$$P.I. = (D_{90} - D_{10})/D_{50}$$

worin $D_{90}$, $D_{10}$ und $D_{50}$ Teilchendurchmesser bezeichnen, für die gilt:

$D_{90}$: 90 Gew % der Gesamtmasse aller Teilchen haben einen Teilchendurch- messer kleiner oder gleich $D_{90}$
$D_{50}$: 50 Gew % der Gesamtmasse aller Teilchen haben einen Teilchendurch- messer kleiner oder gleich $D_{50}$
$D_{10}$: 10 Gew % der Gesamtmasse aller Teilchen haben einen Teilchendurch- messer kleiner oder gleich $D_{10}$

3. Verfahren gemäß Anspruch 1 oder 2, **dadurch gekennzeichnet, dass** es sich bei den Polymerteilchen des farbigen Polymersystems um eine Teilchensorte handelt.

4. Verfahren gemäß einem der Ansprüche 1 bis 3, **dadurch gekennzeichnet, dass** es sich bei den Polymerteilchen des farbigen Polymersystems um zwei Teilchensorten handelt.

5. Verfahren gemäß einem der Ansprüche 1 bis 4, **dadurch gekennzeichnet, dass** die in dem farbigen Polymersystem enthaltenen Polymere insgesamt zu mindestens 40 Gew. % aus sogenannten Hauptmonomeren, ausgewählt aus $C_1$ bis $C_{20}$ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut sind.

6.  Verfahren gemäß einem der Ansprüche 1 bis 5 **dadurch gekennzeichnet, dass** sich die Polymerteilchen des farbigen Polymersystems und die Matrix im Brechungsindex unterscheiden.

7.  Verfahren gemäß einem der Ansprüche 1 bis 6 **dadurch gekennzeichnet, dass** der Unterschied im Brechungsindex mindestens 0,01, insbesondere mindestens 0,1 beträgt.

8.  Verfahren gemäß einem der Ansprüche 1 bis 7 **dadurch gekennzeichnet, dass** es sich bei der Matrix um eine polymere Verbindung handelt.

9.  Verfahren gemäß einem der Ansprüche 1 bis 8, **dadurch gekennzeichnet, dass** die Polymerteilchen durch Polymerisation von radikalisch oder metallkatalytisch polymerisierbaren Verbindungen (Monomere) in Wasser in Gegenwart einer oberflächenaktiven Verbindung (Emulsionspolymerisation) erhältlich sind.

10.  Verfahren gemäß einem der Ansprüche 1 bis 9, **dadurch gekennzeichnet, dass** es sich bei den Polymerteilchen des farbigen Polymersystems um den Kern von Kern/Schale Polymeren handelt und die Matrix durch Verfilmung der Schale gebildet wird.

11.  Verfahren gemäß einem der Ansprüche 1 bis 10, **dadurch gekennzeichnet, dass** der Polydispersitätsindex des Kerns der Kern/Schale Polymeren kleiner 0,45 ist.

12.  Verfahren gemäß einem der Ansprüche 1 bis 11, **dadurch gekennzeichnet, dass** der Kern der Kern/Schale Polymeren vernetzt ist.

13.  Verfahren gemäß einem der Ansprüche 1 bis 12, **dadurch gekennzeichnet, dass** bei den Kern/Schale Polymeren die Glasübergangstemperatur des Schalen-Polymers kleiner als die des Kern Polymeren ist.

14.  Verfahren gemäß einem der Ansprüche 1 bis 13, **dadurch gekennzeichnet, dass** bei den Kern/Schale Polymeren das Gewichtsverhältnis des Kerns zur Schale 1 : 0,05 bis 1 : 20 beträgt.

15.  Verfahren gemäß einem der Ansprüche 1 bis 14, **dadurch gekennzeichnet, dass** der Abstand zwischen den Polymerteilchen der farbigen Polymerschicht 100 bis 400 Nanometer beträgt.

16.  Verfahren gemäß einem der Ansprüche 1 bis 15, **dadurch gekennzeichnet, dass** das Polymer der transparenten Schicht insgesamt zu mindestens 40 Gew. % aus sogenannten Hauptmonomeren, ausgewählt aus $C_1$ bis $C_{20}$ Alkyl (meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

17.  Verfahren gemäß einem der Ansprüche 1 bis 16, **dadurch gekennzeichnet, dass** es sich bei dem Polymer der transparenten Schicht um ein Emulsionspolymerisat handelt.

18.  Verfahren gemäß Anspruch 17, **dadurch gekennzeichnet, dass** das Emulsionspolymerisat einen gewichtsmittleren Teilchendurchmesser von 10 bis 500 nm, vorzugsweise 30 bis 200 nm hat.

19.  Verfahren gemäß einem der Ansprüche 1 bis 18, **dadurch gekennzeichnet, dass** das Polymer der transparenten Schicht in Form einer Lösung oder Dispersion auf die farbige Schicht aufgebracht wird und anschließend eine Trocknung erfolgt.

20.  Verfahren gemäß einem der Ansprüche 1 bis 19, **dadurch gekennzeichnet, dass** die Dicke der transparenten Schicht 0,2 bis 100 $\mu$m beträgt

21.  Verfahren zur Verbesserung der Farbbrillanz und der Stabilität eines farbigen Polymersystems aus einer Matrix und diskreten Polymerteilchen, welche gemäß einer definierten Raumgitterstruktur in der Matrix verteilt sind, **dadurch**

**gekennzeichnet dass** man die farbige Polymerschicht auf Temperaturen oberhalb 60 °C erwärmt.

22. Farbiges Polymersystem, erhältlich nach einem Verfahren gemäß einem der Ansprüche 1 bis 21.

23. Verwendung eines farbigen Polymersystems gemäß einem der Ansprüche 1 bis 22 als oder in Beschichtungsmitteln, z. B. zur Beschichtung von Kunststoffen, Kunststofffolien, Papier, Verpackungen etc oder in optischen Anzeigen mit sich ändernder Farbe der Polymerschicht

**Claims**

1. A process for improving the brilliance of color and the stability of a colored polymer system composed of a matrix and of discrete polymer particles distributed in accordance with a defined spatial lattice structure in the matrix, which comprises applying a transparent polymer layer to the colored polymer layer.

2. The process according to claim 1, wherein the polymer particles of the colored polymer system comprise one or more types of particle with a median particle diameter in the range from 0.05 to 5 $\mu$m, where, however, each type of particle has a polydispersity index (PI) smaller than 0.6, calculated from the formula

$$PI = (D_{90}-D_{10})/D_{50}$$

where $D_{90}$, $D_{10}$, and $D_{50}$ are particle diameters for which the following apply:

$D_{90}$: 90% by weight of the total weight of all of the particles have a particle di- ameter smaller than or equal to $D_{90}$
$D_{50}$: 50% by weight of the total weight of all of the particles have a particle di- ameter smaller than or equal to $D_{50}$
$D_{10}$: 10% by weight of the total weight of all of the particles have a particle di- ameter smaller than or equal to $D_{10}$.

3. The process according to claim 1 or 2, wherein the polymer particles of the colored polymer system comprise one type of particle.

4. The process according to any of claims 1 to 3, wherein the polymer particles of the colored polymer system comprise two types of particle.

5. The process according to any of claims 1 to 4, wherein the entirety of the polymers comprised in the colored polymer system is composed of at least 40% by weight of what are known as main monomers, selected from $C_1$-$C_{20}$-alkyl (meth)acrylates, vinyl esters of carboxylic acids which comprise up to 20 carbon atoms, vinylaromatics having up to 20 carbon atoms, ethylenically unsaturated nitriles, vinyl halides, vinyl ethers of alcohols which comprise from 1 to 10 carbon atoms, aliphatic hydrocarbons having from 2 to 8 carbon atoms and one or two double bonds, or mixtures of these monomers.

6. The process according to any of claims 1 to 5, wherein the polymer particles of the colored polymer system and the matrix differ in refractive index.

7. The process according to any of claims 1 to 6, wherein the difference in refractive index is at least 0.01, in particular at least 0.1.

8. The process according to any of claims 1 to 7, wherein the matrix is a polymeric compound.

9. The process according to any of claims 1 to 8, wherein the polymer particles are obtainable by polymerizing, in water and in the presence of a surface-active compound (emulsion polymerization), compounds (monomers) capable of polymerization by a free-radical or metal-catalyzed route.

10. The process according to any of claims 1 to 9, wherein the polymer particles of the colored polymer system are the core of core-shell polymers, and the matrix is formed by filming of the shell.

11. The process according to any of claims 1 to 10, wherein the polydispersity index of the core of the core/shell polymers

EP 1 625 188 B1

is smaller than 0.45.

12. The process according to any of claims 1 to 11, wherein the core of the core/shell polymers has been crosslinked.

13. The process according to any of claims 1 to 12, wherein the glass transition temperature of the shell polymer in the core/shell polymers is lower than that of the core polymer.

14. The process according to any of claims 1 to 13, wherein the core-to-shell weight ratio in the core/shell polymers is from 1:0.05 to 1:20.

15. The process according to any of claims 1 to 14, wherein the distance between the polymer particles of the colored polymer layer is from 100 to 400 nanometers.

16. The process according to any of claims 1 to 15, wherein the entirety of the polymer of the transparent layer is composed of at least 40% by weight of what are known as main monomers, selected from $C_1$-$C_{20}$-alkyl (meth) acrylates, vinyl esters of carboxylic acids which comprise up to 20 carbon atoms, vinylaromatics having up to 20 carbon atoms, ethylenically unsaturated nitriles, vinyl halides, vinyl ethers of alcohols which comprise from 1 to 10 carbon atoms, aliphatic hydrocarbons having from 2 to 8 carbon atoms and one or two double bonds, or mixtures of these monomers.

17. The process according to any of claims 1 to 16, wherein the polymer of the transparent layer is an emulsion polymer.

18. The process according to claim 17, wherein the emulsion polymer has a ponderal median particle diameter of from 10 to 500 nm, preferably from 30 to 200 nm.

19. The process according to any of claims 1 to 18, wherein the polymer of the transparent layer is applied in the form of a solution or dispersion to the colored layer, and a drying process then takes place.

20. The process according to any of claims 1 to 19, wherein the thickness of the transparent layer is from 0.2 to 100 $\mu$m.

21. A process for improving the brilliance of color and the stability of a colored polymer system, which is composed of a matrix and of discrete polymer particles distributed in accordance with a defined spatial lattice structure in the matrix, which comprises heating the colored polymer system to temperatures above 60°C.

22. A colored polymer system, obtainable by a process according to any of claims 1 to 21.

23. The use of a colored polymer system according to any of claims 1 to 22 as, or in, coating composition(s), e.g. for the coating of plastics, plastics films, paper, packaging, etc., or in visual displays where the color of the polymer layer changes.

**Revendications**

1. Procédé d'amélioration de la brillance de la couleur et de la stabilité d'un système polymère coloré constitué d'une matrice et de particules polymères discrètes, qui sont réparties selon une structure de réseau spatial définie dans la matrice, **caractérisé en ce qu'**une couche polymère transparente est appliquée sur la couche polymère colorée.

2. Procédé selon la revendication 1, **caractérisé en ce que** les particules polymères du système polymère coloré sont un ou plusieurs types de particules ayant un diamètre de particule moyen dans la plage allant de 0,05 à 5 $\mu$m, tous les types de particule ayant toutefois un indice de polydispersité (PI) inférieur à 0,6, calculé selon la formule

$$P.I. = (D_{90} - D_{10}) D_{50}$$

$D_{90}$, $D_{10}$ et $D_{50}$ désignant des diamètres de particule pour lesquels :

$D_{90}$ : 90 % de la masse totale de toutes les particules ont un diamètre de particule inférieur ou égal à $D_{90}$ $D_{50}$ :

14

50 % de la masse totale de toutes les particules ont un diamètre de particule inférieur ou égal à $D_{50}$ $D_{10}$ : 10 % de la masse totale de toutes les particules ont un diamètre de particule inférieur ou égal à $D_{10}$.

3. Procédé selon la revendication 1 ou 2, **caractérisé en ce que** les particules polymères du système polymère coloré sont un type de particules.

4. Procédé selon l'une quelconque des revendications 1 à 3, **caractérisé en ce que** les particules polymères du système polymère coloré sont deux types de particules.

5. Procédé selon l'une quelconque des revendications 1 à 4, **caractérisé en ce que** les polymères contenus dans le système polymère coloré sont au total constitués d'au moins 40 % en poids de monomères dits principaux, choisis parmi les (méth)acrylates d'alkyle en $C_1$ à $C_{20}$, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atome C et une ou deux doubles liaisons ou les mélanges de ces monomères.

6. Procédé selon l'une quelconque des revendications 1 à 5, **caractérisé en ce que** les particules polymères du système polymère coloré et la matrice ont un indice de réfraction différent.

7. Procédé selon l'une quelconque des revendications 1 à 6, **caractérisé en ce que** la différence d'indice de réfraction est d'au moins 0,01, notamment d'au moins 0,1.

8. Procédé selon l'une quelconque des revendications 1 à 7, **caractérisé en ce que** la matrice est un composé polymère.

9. Procédé selon l'une quelconque des revendications 1 à 8, **caractérisé en ce que** les particules polymères peuvent être obtenues par polymérisation de composés polymérisables (monomères) par voie radicalaire ou par catalyse métallique dans de l'eau en présence d'un composé tensioactif (polymérisation en émulsion).

10. Procédé selon l'une quelconque des revendications 1 à 9, **caractérisé en ce que** les particules polymères du système polymère coloré sont le noyau de polymères noyau/enveloppe et la matrice est formée par filmisation de l'enveloppe.

11. Procédé selon l'une quelconque des revendications 1 à 10, **caractérisé en ce que** l'indice de polydispersité du noyau des polymères noyau/enveloppe est inférieur à 0,45.

12. Procédé selon l'une quelconque des revendications 1 à 11, **caractérisé en ce que** le noyau des polymères noyau/ enveloppe est réticulé.

13. Procédé selon l'une quelconque des revendications 1 à 12, **caractérisé en ce que** la température de transition vitreuse du polymère de l'enveloppe des polymères noyau/enveloppe est inférieure à celle des polymères du noyau.

14. Procédé selon l'une quelconque des revendications 1 à 13, **caractérisé en ce que** le rapport en poids entre le noyau et l'enveloppe des polymères noyau/enveloppe est de 1:0,05 à 1:20.

15. Procédé selon l'une quelconque des revendications 1 à 14, **caractérisé en ce que** la distance entre les particules polymères de la couche polymère colorée est de 100 à 400 nanomètres.

16. Procédé selon l'une quelconque des revendications 1 à 15, **caractérisé en ce que** le polymère de la couche transparente est au total constitué d'au moins 40 % en poids de monomères dits principaux, choisis parmi les (méth) acrylates d'alkyle en $C_1$ à $C_{20}$, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atome C et une ou deux doubles liaisons ou les mélanges de ces monomères.

17. Procédé selon l'une quelconque des revendications 1 à 16, **caractérisé en ce que** le polymère de la couche transparente est un polymère en émulsion.

**18.** Procédé selon la revendication 17, **caractérisé en ce que** le polymère en émulsion a un diamètre de particule moyen en poids de 10 à 500 nm, de préférence de 30 à 200 nm.

**19.** Procédé selon l'une quelconque des revendications 1 à 18, **caractérisé en ce que** le polymère de la couche transparente est appliqué sur la couche colorée sous la forme d'une solution ou d'une dispersion, puis un séchage a lieu.

**20.** Procédé selon l'une quelconque des revendications 1 à 19, **caractérisé en ce que** l'épaisseur de la couche transparente est de 0,2 à 100 $\mu$m.

**21.** Procédé d'amélioration de la brillance de la couleur et de la stabilité d'un système polymère coloré constitué d'une matrice et de particules polymères discrètes, qui sont réparties selon une structure de réseau spatial définie dans la matrice, **caractérisé en ce que** la couche polymère colorée est portée à des températures supérieures à 60 °C.

**22.** Système polymère coloré, pouvant être obtenu par un procédé selon l'une quelconque des revendications 1 à 21.

**23.** Utilisation d'un système polymère coloré selon l'une quelconque des revendications 1 à 22 en tant que ou dans des agents de revêtement, p. ex. pour le revêtement de plastiques, de films plastiques, de papier, d'emballages, etc. ou dans des indicateurs optiques avec une couleur de la couche polymère se modifiant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19717879
- DE 19820302
- DE 19834194
- DE 10229732
- EP 0847852 A
- DE 19717879 A
- DE 19820302 A

### In der Beschreibung aufgeführte Nicht-Patentliteratur

- **W. Mächtle.** *Makromolekulare Chemie,* 1984, vol. 185, 1025-1039
- Makromolekulare Stoffe. Georg-Thieme-Verlag, 1961, 411-420